(19) Europäisches Patentamt
European Patent Office
Office européen des brevets

(11) **EP 2 555 160 B1**

(12) **EUROPÄISCHE PATENTSCHRIFT**

(45) Veröffentlichungstag und Bekanntmachung des Hinweises auf die Patenterteilung:
**09.10.2013 Patentblatt 2013/41**

(51) Int Cl.:
***G06T 7/00*** *(2006.01)*     ***G06K 9/20*** *(2006.01)*

(21) Anmeldenummer: **11176650.7**

(22) Anmeldetag: **05.08.2011**

(54) **Erzeugung eines in interessante und uninteressante Bereiche vorsegmentierten Bildes**

Generation of an image segmented into interesting and uninteresting areas

Production d'une image présegmentée en domaines intéressants et inintéressants

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.02.2013 Patentblatt 2013/06**

(73) Patentinhaber: **SICK AG**
**79183 Waldkirch (DE)**

(72) Erfinder:
- **Schüler, Pascal**
**79331 Teningen (DE)**
- **Rinklin, Dietram**
**79194 Gundelfingen (DE)**
- **Zwölfer, Ulrich**
**79341 Kenzingen (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
**US-B1- 6 738 496**

- **EHSAN S ET AL: "Exploring Integral Image Word Length Reduction Techniques for SURF Detector", COMPUTER AND ELECTRICAL ENGINEERING, 2009. ICCEE '09. SECOND INTERNATIONAL CONFERENCE ON, IEEE, PISCATAWAY, NJ, USA, 28. Dezember 2009 (2009-12-28), Seiten 635-639, XP031609787, ISBN: 978-1-4244-5365-8**
- **CROW F C: "Summed-area tables for texture mapping", COMPUTERS AND GRAPHICS, ELSEVIER, GB, Bd. 18, Nr. 3, 1. Juli 1984 (1984-07-01), Seiten 207-212, XP002495694, ISSN: 0097-8493, DOI: 10.1145/964965.808600**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Kamerasystem zur Erzeugung eines vorsegmentierten Bildes sowie ein Verfahren zum Vorsegmentieren eines in Pixel aufgelösten Rohbildes in interessante und uninteressante Bereiche nach dem Oberbegriff von Anspruch 1 beziehungsweise 11.

Kamerasysteme liefern, besonders wenn sie hochauflösend sind, große Bilddatenmengen. Zu deren Verarbeitung sind hohe Rechen- und Speicherkapazitäten erforderlich. Oft sind aber nur Teilausschnitte der Bilder relevant und durch Beschränkung auf solche Teilausschnitte wird die Bildverarbeitung erheblich vereinfacht.

Ein Anwendungsfeld für Kameras ist die Codelesung. Hier lösen mit der Weiterentwicklung der digitalen Kameratechnologie kamerabasierte Systeme zunehmend die noch weit verbreiteten Barcodescanner ab, welche einen Barcode mit einem Lesestrahl quer zum Code abtasten. Codeleser werden zum Beispiel an Supermarktkassen, zur automatischen Paketidentifikation, zur Sortierung von Postsendungen oder bei der Gepäckabfertigung in Flughäfen und in anderen Logistikanwendungen eingesetzt.

Ein kamerabasierter Codeleser nimmt, statt Codebereiche abzuscannen, mit Hilfe eines pixelaufgelösten Bildsensors Bilder der Objekte mit den darauf befindlichen Codes auf. Anschließend extrahiert eine Bildauswertungssoftware aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Im etwas weiteren Sinne stellt auch eine Beschriftung einen Code dar. Um die Beschriftungen automatisiert lesen zu können, werden Texterkennungsprogramme (OCR, optical character reading) eingesetzt. In den oben genannten Logistikanwendungen werden solche Beschriftungen anstelle oder ergänzend zu klassischen Strich- oder 2D-Codes verwendet.

In einer wichtigen Anwendungsgruppe werden die Code tragenden Objekte an dem Codeleser vorbei gefördert. Eine Zeilenkamera liest die Objektbilder mit den Codeinformationen sukzessive und zeilenweise mit der Relativbewegung ein. Damit die Objekte in beliebiger Orientierung auf dem Förderer angeordnet werden können, sind oft mehrere Codeleser vorgesehen, um Objekte von mehreren oder allen Seiten aufzunehmen.

Wenn eine Kamera im Bereich der Codelesung oder Texterkennung eingesetzt wird, bilden diejenigen Bildbereiche, in denen sich Codes oder Texte befinden können, die interessanten Bereiche, während sonstige Bildbereiche nicht weiter ausgewertet werden müssen. Wenn also die Code- und Textbereiche frühzeitig in der Verarbeitungskette identifiziert werden, kann der Bildverarbeitungsaufwand erheblich reduziert werden, und die Hardwareanforderungen sinken.

Aus diesem Grund werden die von der Kamera eingelesenen Bilder vor der eigentlichen Bildverarbeitung einer Vorsegmentierung in interessante Bildbereiche (ROI, region of interest) und uninteressante Bildbereiche unterzogen. Im Falle der Codelesung zeichnen sich die interessanten Bildbereiche durch deutlich sichtbare, also kontrastreiche Strukturen aus, da diese als potentielle Codekandidaten anzusehen sind. Der Grad an Strukturgehalt eines Bildbereichs ist aber auch in anderen Bildverarbeitungsszenarien relevant. Denn strukturlose, somit weitgehend homogene Bildbereiche enthalten weniger auswertbare Bildinformation und sind daher für die meisten Anwendungen der Bildverarbeitung weniger interessant.

Die Vorsegmentierung oder Bildzerlegung erfolgt herkömmlich durch Algorithmen, die auf einem handelsüblichen Prozessor (CPU) ablaufen. Dadurch entsteht zwar eine hohe Flexibilität für die Implementierung unterschiedlicher Bildverarbeitungen. Wenn aber ein schnelles oder gar echtzeitfähiges System gefordert wird, wie etwa bei der Codelesung an einem Förderband, sind die Laufzeiten auf einem Prozessor oftmals zu lang. Denn zur korrekten Vorsegmentierung muss der Prozessor auf jeden Pixel des zu zerlegenden Bildes zugreifen und dessen Pixel- oder Grauwert auslesen. Ein Pixelzugriff durch den Prozessor ist aber relativ langsam, und deshalb führen diese zahllosen Pixelzugriffe zu einer inakzeptablen Laufzeit oder zu sehr hohen Anforderungen an die Rechenkapazität des Prozessors.

Aus der US 6 738 496 B1 ist eine Echtzeit-Binarisierung von Grauwertbildern bekannt. Dabei findet eine statistische Vorauswahl von Kacheln anhand der Varianz oder anhand von Histogrammen statt. Es werden nur solche Kacheln binarisiert, die nach dieser Vorauswahl eine höhere Varianz aufweisen als durch eine Schwelle vorgegeben. Damit ist das Bild in der gewünschten Weise vorsegmentiert, aber diese Vorsegmentierung stellt genau die soeben genannten zu hohen Anforderungen an den Prozessor.

Die Arbeit von S. Ehsan et al., "Exploring Integral Image Word Length Reduction Techniques for SURF Detector", 2009 Second International Conference on Computer and Electrical Engineering, IEEE Piscataway, NJ, USA, 28. Dezember 2009, S. 635-639 befasst sich mit einem Bildverarbeitungsverfahren zur Merkmalsextraktion. Dabei werden Integralbilder verwendet, und es ist vorgesehen, das Prototyping auf einem FPGA vorzunehmen.

Es ist daher Aufgabe der Erfindung, eine verbesserte Vorsegmentierung eines Bildes in interessante und uninteressante Bereiche zu ermöglichen.

Diese Aufgabe wird durch ein Kamerasystem zur Erzeugung eines in interessante und uninteressante Bereiche vorsegmentierten Bildes sowie ein Verfahren zum Vorsegmentieren eines in Pixel aufgelösten Rohbildes in interessante und uninteressante Bereiche gemäß Anspruch 1 beziehungsweise 11 gelöst. Dabei geht die Erfindung von dem Grundgedanken aus, das Bild zunächst ohne Rücksicht auf die Bildinhalte in Teilbereiche zu zerteilen, beispielsweise in Teilbereiche, deren Größe durch Parameter festgelegt ist. Für jeden Teilbereich wird der Kontrast geprüft. Die aufwändige Berechnung der Kontrastwerte wird in zwei Stufen unterteilt. Die zahlreichen Zugriffe auf die einzelnen Pixel der Teilbereiche werden in ein FPGA vorgelagert, welches die Pixelinformationen in summarischen Werten zusammenfasst. Dazu genügen sehr schnelle, einfache Operationen, beispielweise alleine Additionen. Die eigentliche Berechnung des Kontrastwerts erfolgt dann nachgelagert auf Basis der summarischen Werte au-ßerhalb des FPGAs. Dabei sind keinerlei Pixelzugriffe mehr erforderlich. Dafür stehen mächtigere Rechenoperationen zur Verfügung, wie Division oder Wurzelziehen, wobei einige wenige solche Operationen auf die summarischen Werte angewandt ausreichen, um den Kontrastwert zu berechnen.

In der Regel interessiert man sich für die kontraststarken Bildbereiche, so dass also Teilbereiche mit hohem Kontrastwert als interessante Bereiche und die übrigen Teilbereiche als uninteressante Bereiche eingestuft werden. Dabei ist Kontrast in einem weiten Sinne zu verstehen als ein Maß für die Struktur in diesem Teilbereich. Als kontrastschwach ist daher ein gleichförmiger, also strukturloser Teilbereich zu verstehen. Die konkrete Grenze, die kontraststarke und gleichförmige Teilbereiche trennt, hängt von den Anwendungsbedingungen ab.

Der Bildsensor liefert im Falle von Codelesung vorzugsweise ein Grauwertbild, so dass also die Pixelzugriffe jeweils eine Zahl liefern, die für einen Helligkeits- oder Grauwert steht.

Die Erfindung hat den Vorteil, dass die Vorsegmentierung deutlich beschleunigt und vereinfacht wird. Damit kann ein zweidimensionales Eingabebild schnell zerlegt und an nachfolgende Bildverarbeitungsschritte übergeben werden. Durch ausgewogene Arbeitsaufteilung zwischen der Vorverarbeitungseinheit und der Strukturerkennungseinheit werden die Stärken und Schwächen der unterschiedlichen Architekturen vorteilhaft ausgenutzt. Das FPGA eignet sich für schnelle Pixelzugriffe und rasche Ausführung einer großen Zahl von einfachen Operationen, bietet aber dafür keine mächtigeren Rechenoperationen. Umgekehrt kann die Strukturerkennungseinheit durch flexible Programmierung praktisch jede Operation ausführen, benötigt aber für stark repetitive Operationen, wie Pixelzugriffe oder Additionen, vergleichsweise mehr Rechenzeit. Durch das Zusammenspiel beider Elemente, bei denen die summarischen Werte als Schnittstelle dienen, können beliebige große Roh- oder Eingangsbilder sehr schnell vorsegmentiert werden. Gegenüber dem herkömmlichen, rein CPU-basierten Verfahren wird besonders bei hoch aufgelösten Eingangsbildern ein erheblicher Laufzeitgewinn erzielt.

Die Strukturerkennungseinheit ist bevorzugt auf einem Mikroprozessor implementiert. Dabei kann unter Mikroprozessor jede Art von digitalem Baustein verstanden werden, der sich für die flexible Implementierung komplexer Algorithmen und Rechenoperationen eignet. Prinzipiell ist der Mikroprozessor auch in der Lage, die summarischen Werte zu berechnen. Wegen des im Vergleich zu einem FPGA langsamen Pixelzugriffs müsste dann aber bei gleicher Laufzeit und Rechenkapazität der Teilbereich unterabgetastet werden, also nur ein Teil der Pixel des Teilbereichs für die Bestimmung des Kontrastswerts herangezogen werden. Das führt zu einer ungenaueren Vorsegmentierung.

Die summarischen Werte umfassen bevorzugt eine Teilbereichssumme, in der alle Pixelwerte eines Teilbereichs aufaddiert sind, und eine Teilbereichsquadratsumme, in der alle quadrierten Pixelwerte des Teilbereichs aufaddiert sind. Die Berechnung dieser Werte erfordert ausschließlich Additionen und eine Multiplikation beim Quadrieren. Damit kann das FPGA diese Werte sehr effizient berechnen, während sie zugleich sehr charakteristisch für den Kontrast in dem Teilbereich sind.

Die Vorverarbeitungseinheit ist bevorzugt dafür ausgebildet, ein Integralbild des Rohbildes zu berechnen, das in jedem Pixel die kumulierten Pixelwerte eines von dem Pixel und einer Ecke des Rohbildes aufgespannten Rechtecks hält. Aus einem derartigen Integralbild können später Teilbereichssummen beliebiger rechteckiger Ausschnitte anhand von wenigen Additionen und Subtraktionen allein aus den Eckwerten der Ausschnitte bestimmt werden. Ein Integralbild dient außerdem als Grundlage für die weitere Bildverarbeitung mit einer Reihe von Filtern.

Die Vorverarbeitungseinheit ist bevorzugt dafür ausgebildet, die summarischen Werte in Echtzeit zu berechnen und ein Bild auszugeben, dem die summarischen Werte für die Teilbereiche hinzugefügt sind. Die Echtzeitauswertung wird durch die Aufgabenverteilung zwischen Vorverarbeitungseinheit und Strukturerkennungseinheit ermöglicht. Im Falle der einleitend beschriebenen Ausführungsform als Zeilenkamera an einem Förderband bedeutet Echtzeitauswertung ("on- the- fly") speziell, dass die eingelesenen Bildzeilen ausgewertet und die summarischen Werte der zugehörigen Teilbereiche aktualisiert werden, noch während weitere Bildzeilen eingelesen werden. Unmittelbar nachdem dann der Bildsensor ein Bild oder einen Bildausschnitt fertig erfasst hat, sind die in Echtzeit ausgeführten Bildverarbeitungsschritte bereits abgeschlossen. Neben der Bestimmung der summarischen Parameter können auch weitere Echtzeitverarbeitungsschritte vorgenommen werden, beispielsweise eine Echtzeitbinarisierung oder eine Bildkompression, speziell eine JPEG- Kompression, oder allgemein eine Filterung. Bei der Weitergabe der Bilddaten an nachgeordnete Einheiten, speziell an die Strukturerkennungseinheit, werden dann die summarischen Werte an die Bilddaten angehängt, beispielsweise als zusätzliche Bildzeilen.

Die Strukturerkennungseinheit ist bevorzugt dafür ausgebildet, den Kontrastwert basierend auf der Varianz oder der Standardabweichung der Pixelwerte eines Teilbereichs zu berechnen. Im einfachsten Fall wird die Varianz oder Standardabweichung unmittelbar mit dem Kontrastwert gleichgesetzt. Der Kontrastwert kann aber auch daraus abgeleitet sein, beispielsweise als Vielfaches oder als Bruchteil. Weiterhin ist denkbar, dass die Varianz oder Standardabweichung nur eines von mehreren Kriterien für die Entscheidung ist, ob ein Teilbereich als interessant oder uninteressant eingestuft wird.

Die Strukturerkennungseinheit berechnet bevorzugt die Varianz als Differenz der Teilbereichsquadratsumme geteilt durch die Pixelanzahl eines Teilbereichs minus die quadrierte Teilbereichssumme geteilt durch die quadrierte Pixelanzahl des Teilbereiches und/oder die Standardabweichung als Wurzel der derart berechneten Varianz. Damit werden Standardabweichung oder Varianz mit einer minimalen Anzahl von Rechenoperationen aus den summarischen Werten berechnet, so dass hierfür nur wenig Rechenkapazität der Strukturerkennungseinheit erforderlich ist.

Die Strukturerkennungseinheit vergleicht bevorzugt den Kontrastwert eines Teilbereichs mit einer Mindestkontrastschwelle, um zu entscheiden, ob der Teilbereich ein interessanter Bereich oder ein uninteressanter Bereich ist. Die Mindestkontrastschwelle ist insbesondere so gewählt, dass bei deren Überschreiten Text- oder Codebereiche in dem Teilbereich vermutet werden. Vorzugsweise wird die Mindestkontrastschwelle absichtlich zu niedrig angesetzt, beispielsweise auf dem halben Kontrastwert dessen, bei dem Text- oder Codebereiche vermutet werden. Auf diese Weise werden letztlich zu viele Teilbereiche als interessant eingestuft, und damit entsteht Mehraufwand. Dieser Fehler kann aber eher toleriert werden als Fehler der anderen Art, nämlich Fehl- oder Nichtlesungen aufgrund fälschlich als uninteressant eingestufter Teilbereiche.

Die Strukturerkennungseinheit ist bevorzugt dafür ausgebildet, in einem Labelbild mit einem als Flag genutzten Pixel je Teilbereich das Flag je nach Entscheidung anhand des Kontrastwerts auf einen Wert für einen interessanten Bereich oder einen Wert für einen uninteressanten Bereich zu setzen. Damit ist das Resultat der Vorsegmentierung einerseits das eigentliche Bild und andererseits das Labelbild, aus dem für jeden Teilbereich direkt ausgelesen werden kann, ob dieser Teilbereich interessant ist und somit bei der nachgelagerten Bildverarbeitung noch berücksichtigt werden soll.

Die Teilbereiche sind bevorzugt rechteckige Teilbereiche, insbesondere untereinander gleich große rechteckige Teilbereiche. Solche Teilbereiche werden auch als Kacheln bezeichnet. Die Dimensionen der Teilbereiche sind vorzugsweise parametrierbar, liegen aber für die jeweilige Vorsegmentierung fest. Somit kennt auch das FPGA die Grenzen der Teilbereiche und kann die summarischen Werte in Echtzeit bestimmen. Kacheln sind sowohl für die Vorsegmentierung als auch für die nachgelagerte Bildauswertung geeignete Bildausschnitte.

In vorteilhafter Weiterbildung weist ein kamerabasierter Codeleser eines der zuvor beschriebenen Kamerasysteme sowie eine Decodiereinheit auf, die dafür ausgebildet ist, in den interessanten Bereichen nach Codes zu suchen, uninteressante Bereiche zu ignorieren und aufgefundene Codes zu decodieren. Somit wird die Vorsegmentierung vorteilhaft für eine effiziente und hochwertige Codelesung ausgenutzt. Dabei kann der Codeleser und insbesondere dessen Decodiereinheit zum Lesen von 1 D-Codes, also Strichcodes, von 2D-Codes gemäß beliebiger Norm sowie von Textbereichen (OCR) ausgebildet sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1   eine Blockdarstellung eines kamerabasierten Codelesers mit Elementen für eine Vorsegmentierung;

Fig. 2   ein schematisches, von einem Kamerasystem gemäß Figur 1 aufgenommenes und vorsegmentiertes Beispielbild;

Fig. 3   ein reales Beispielbild nach Vorsegmentierung bei einer ersten Einstellung von Kachelgröße und Mindestkontrastschwelle; und

Fig. 4   ein reales Beispielbild nach Vorsegmentierung bei einer zweiten Einstellung von Kachelgröße und Mindestkontrastschwelle.

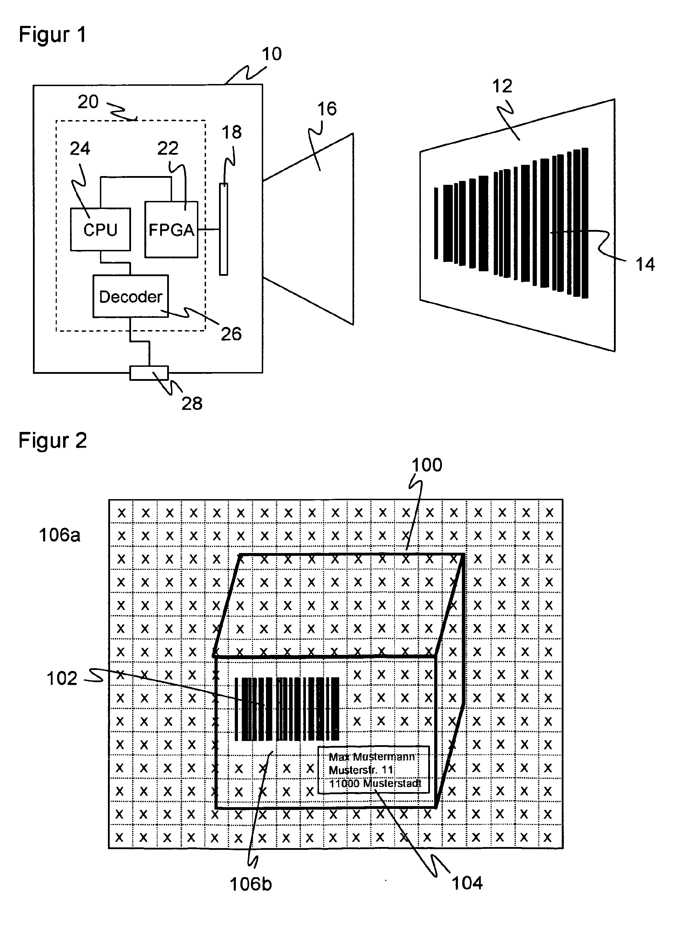

Figur 1 zeigt eine Blockdarstellung eines Kamerasystems in einer Ausführungsform als kamerabasierter Codeleser 10. Der Codeleser 10 erfasst einen Aufnahmebereich 12, in dem sich Codes 14 befinden können, über ein nur ganz schematisch dargestelltes Aufnahmeobjektiv 16. Ein Bildsensor 18, beispielsweise ein CCD- oder CMOS-Chip mit einer Vielzahl von zu einer Zeile oder einer Matrix angeordneten Pixelelementen, erzeugt Bilddaten des Aufnahmebereichs 12 und gibt diese als Rohbild oder Eingangsbild an eine als Ganzes mit Bezugszeichen 20 gekennzeichnete Auswertungseinheit weiter.

Die Auswertungseinheit 20 umfasst eine Vorverarbeitungseinheit 22, die auf einem FPGA implementiert ist sowie eine Strukturerkennungseinheit 24 und eine Decodierungseinheit 26, die beispielsweise auf je einem Mikroprozessor oder auf einem gemeinsamen Mikroprozessor implementiert sind.

Die Vorverarbeitungseinheit 22 und die Strukturerkennungseinheit 24 erzeugen gemeinsam aus dem Eingangsbild in einer weiter unten genauer beschriebenen Weise ein vorsegmentiertes Bild, das beispielhaft und nur sehr schematisch in Figur 2 gezeigt ist. Das Eingangsbild enthält ein Paket 100 mit zwei beispielhaften Arten von Codierung, nämlich einen Barcode 102 und eine Beschriftung 104. Ziel der Vorsegmentierung ist, diejenigen Bildbereiche vorab als interessant zu erkennen, in denen Codierungen vorhanden sein könnten, und andere Bildbereiche als uninteressant zu markieren.

Das vorsegmentierte Beispielbild der Figur 2 ist in eine Vielzahl von rechteckigen Teilbereichen oder Kacheln 106a-b unterteilt. Kacheln 106a, die als interessante Bereiche angesehen werden, sind freigelassen dargestellt. Dagegen sind Kacheln 106b durchgestrichen, die als uninteressante Bereiche angesehen werden. Wie leicht erkennbar, enthalten die freigelassenen Kacheln 106a sämtliche auswertbaren Codeinformationen 102, 104, während der von ihnen beanspruchte Bildbereich gegenüber dem Gesamtbild deutlich verkleinert ist. Das Kriterium für die Auswahl interessanter und uninteressanter Bereiche ist der Kontrast oder die Struktur innerhalb der Kachel 106a-b. Homogene Kacheln 106b haben keinerlei Struktur. An den Kanten des Pakets 100 ist eine gewisse Struktur vorhanden. Das Unterscheidungskriterium zwischen interessanten und uninteressanten Bereichen ist aber in dem Beispiel der Figur 2 so eingestellt, dass die Struktur der Kanten des Pakets 100 nicht ausreicht, um deren Kacheln 106b als interessant zu markieren.

Der Vorsegmentierung nachgelagerte Bildverarbeitungsschritte, beispielsweise die Decodierung in der Decodierungseinheit 26, konzentrieren sich allein auf die als interessant markierten Kacheln 106a. Nur dort werden Codebereiche mit weiteren, nun genaueren und aufwändigeren Verfahren gesucht und decodiert. Das Ergebnis wird je nach Anwendung als Klartext, gemeinsam mit dem vorsegmentierten Bild, dem Rohbild oder anderen Kombinationen der erfassten Bildinformationen an einem Ausgang 28 bereitgestellt. Die Auswertungseinheit 20 und ihre Komponenten können abweichend von Figur 1 auch ganz oder teilweise extern des Codelesers 10 angeordnet sein. In anderen Bildverarbeitungsanwendungen ohne Codelesung fehlt die Decodierungseinheit 26, es können aber dafür andere Einheiten zur Weiterverarbeitung vorgesehen sein.

Bei der Vorsegmentierung wird die Strukturerkennungseinheit 24 von allen Pixelzugriffen durch das FPGA der Vorverarbeitungseinheit 22 entlastet. Der Mikroprozessor der Strukturerkennungseinheit 24 selbst muss demnach während der Vorsegmentierung keinen Pixelzugriff vollziehen.

Zunächst wird das Eingangsbild in einzelne, vorzugsweise quadratische Kacheln einer parametrierbaren Größe unterteilt. Als Kriterium zur Unterscheidung zwischen interessanten Bildbereichen und uninteressanten Bildbereichen wird die Standardabweichung der Pixelwerte, insbesondere der Grauwerte der Kachel herangezogen. Eine geringe Standardabweichung in einer Region impliziert eine homogene, uniforme und damit strukturschwache Region, die deshalb gerade für Codelesung in der weiteren Bildverarbeitungskette nicht interessiert. Eine hohe Standardabweichung dagegen weist auf eine Struktur hin, die mit deutlich erhöhter Wahrscheinlichkeit einem Code entspricht. Deshalb wird die Standardabweichung jeweils mit einem Parameter verglichen, der eine hinreichende Struktur innerhalb der Kachel sicherstellt und als Mindestkontrastschwelle bezeichnet wird.

Der Vorverarbeitungseinheit 22 soll die Aufgabe zufallen, die Standardabweichung jeder Kachel zu bestimmen, weil hierfür zahlreiche Pixelzugriffe erforderlich sind. Dazu bedarf es aber außerdem mathematischer Operationen wie Division und Wurzelziehen, die auf einem FPGA nur mit sehr hohem Laufzeitaufwand umsetzbar sind. Deshalb leistet die Vorverarbeitungseinheit 22 nur vorbereitende Operationen und bestimmt summarische Parameter, welche von der Strukturerkennungseinheit 24 ohne eigene Pixelzugriffe mit wenigen, höheren mathematischen Operationen zu der Standardabweichung verrechnet werden. Damit wird der Aufwand sowohl in der Vorverarbeitungseinheit 22 als auch in der Strukturerkennungseinheit 24 minimiert.

Die Berechnung der Standardabweichung wird für diese Art der Berechnung geeignet umformuliert. Dazu seien $n$ die Anzahl der Pixel oder Bildpunkte in einer Kachel, $x_i$ die einzelnen Grauwerte der Pixel, $m$ deren Mittelwert und $\sigma$ deren Standardabweichung. Die Anzahl $n$ der Pixel einer Kachel ist vorzugsweise parametrierbar, aber für die konkrete Berechnung sowohl in der Vorverarbeitungseinheit 22 als auch in der Strukturerkennungseinheit 24 bekannt und konstant.

Es gilt dann:

$$m = \frac{1}{n}\sum_{i=1}^{n} x_i,$$

$$\sigma^2 = \frac{1}{n}\sum_{i=1}^{n}(x_i - m)^2 = \frac{1}{n}(\sum_{i=1}^{n} x_i^2 - 2m\sum_{i=1}^{n} x_i + nm^2).$$

Man definiert nun eine Teilbereichsquadratsumme *a* als die Summe der Quadrate aller Pixelwerte einer Kachel und eine Teilbereichssumme *b* als die Summe aller Pixelwerte in einer Kachel, d. h.

$$a = \sum_{i=1}^{n} x_i^2,$$

$$b = \sum_{i=1}^{n} x_i.$$

Mit den beiden summarischen Parametern *a*, *b* vereinfacht sich die Berechnung des Mittelwerts auf *m=b/n*. Setzt man das wiederum in die oben angegebene Rechnungsvorschrift für die Standardabweichung ein, so ergibt sich nach Umformung

$$\sigma = \sqrt{\frac{a}{n} - \frac{b^2}{n^2}}.$$

Die beiden summarischen Werte *a*, *b* können in dem FPGA der Vorverarbeitungseinheit 22 rasch und effizient auf Basis einfachster Operationen berechnet werden, nämlich lediglich Additionen und Multiplikationen und keine Divisionen oder dergleichen. Dagegen ist auf Seiten der Strukturerkennungseinheit 24 kein Pixelzugriff erforderlich, um die Standardabweichung einer Kachel 106a-b zu berechnen.

Die summarischen Werte *a*, *b* können überdies auch in Echtzeit, d. h. "on-the-fly" während des Einlesens eines Eingangsbildes berechnet werden, da keinerlei Abhängigkeiten zwischen den eingelesenen Pixelwerten zu beachten sind, sondern letztlich nur Zwischensummen aktualisiert werden müssen. Die Vorverarbeitungseinheit 22 kann die summarischen Werte *a*, *b* auch einfach zusätzlich zu sonstigen Echtzeit-Vorverarbeitungen berechnen, beispielsweise einer Filterung, einer Binarisierung oder einer Bildkompression. Zur Übergabe an die Strukturerkennungseinheit 24 werden die summarischen Werte *a*, *b* für jede Kachel an das übergebene Eingangsbild angehängt, beispielsweise als zusätzliche Zeilen.

Die Strukturerkennungseinheit 24 speichert die Information, ob einer Kachel 106a-b ein interessanter Bereich oder ein uninteressanter Bereich ist, beispielsweise in einem Labelbild ab. Das ist ein Datenbereich aus einer Vielzahl von Flags, die zweidimensional angeordnet sind und deshalb als Pixel des Labelbildes aufgefasst werden können. Die Anzahl der Flags in Breite und Höhe entspricht gerade der Anzahl an Kacheln in den jeweiligen Richtungen. Die Flags können mit einem Wert vorbesetzt werden, beispielsweise werden initial alle Kacheln 106a-b als interessante Bereiche markiert.

Für die Zuweisung der Kacheln 106a-b als interessanter oder uninteressanter Bereich extrahiert die Strukturerkennungseinheit 24 zunächst die summarischen Parameter *a, b* von dem Ende des Eingangsbildes. Dann wird für jede Kachel gemäß der oben angegebenen Formel aus den summarischen Parametern *a, b* die Standardabweichung der Kachel berechnet. Diese Standardabweichung wird mit einer Mindestkontrastschwelle verglichen. Dabei entspricht die Mindestkontrastschwelle einem gewünschten Suchkontrast interessanter Bereiche oder einem Bruchteil davon, beispielsweise der Hälfte. Für jede Kachel, in der die Standardabweichung die Mindestkontrastschwelle unterschreitet, wird in dem Labelbild die Kachel über das zugehörige Flag als uninteressant markiert. Sofern die Flags nicht vorbesetzt sind, wird umgekehrt bei Überschreiten der Mindestkontrastschwelle die Kachel über das zugehörige Flag in dem Labelbild als interessant markiert.

In nachfolgenden Verarbeitungsschritten, insbesondere in der Decodiereinheit 26, wird nun für jede Kachel 106 a-b anhand des Flags in dem Labelbild geprüft, ob diese Kachel ein interessanter Bereich ist. Wenn das nicht der Fall ist, wird die betreffende Kachel ignoriert. Damit ist eine effiziente und schnelle Grobsegmentierung erreicht, welche die nachgeordnete Bildverarbeitung erheblich beschleunigt.

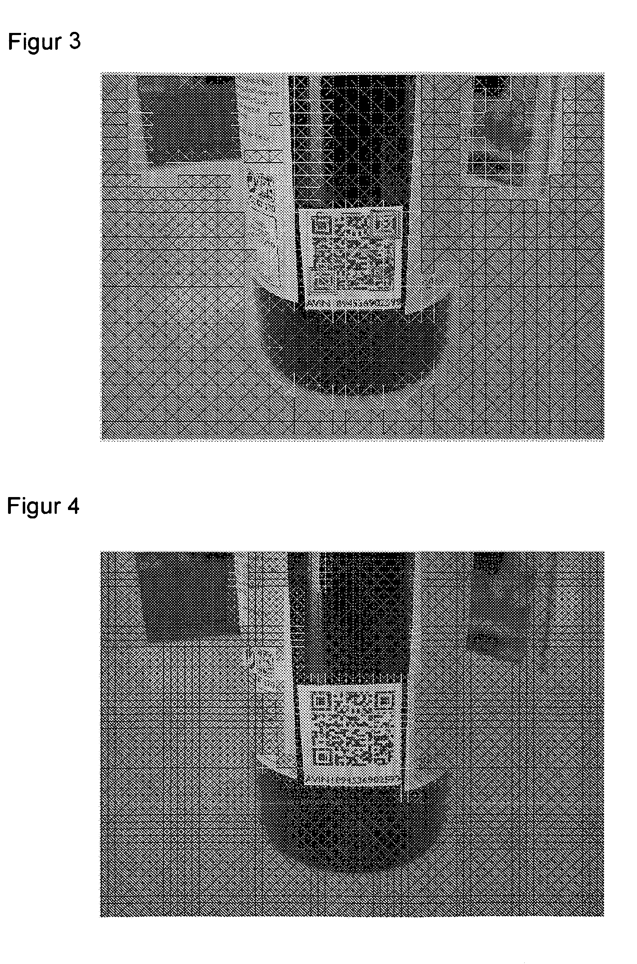

Die Figuren 3 und 4 zeigen reale, von einem erfindungsgemäß arbeitenden Kamerasystem aufgenommene Beispielbilder eines Objekts mit einem Codebereich nach der Vorsegmentierung. Dabei sind in Figur 3 größere Kacheln und eine niedrigere Mindestkontrastschwelle eingestellt als in Figur 4. Die homogenen Bildbereiche außerhalb des Objekts, aber auch uniforme Teilbereiche des Objekts selbst sind in beiden Fällen als uninteressant markiert, indem die Kacheln durch ein massives Kreuz gekennzeichnet sind. Ebenso sind die herauszufilternden Codebereiche mit starker Strukturierung in beiden Fällen als interessant markiert, indem die Kacheln durch ein helleres, schwächeres Kreuz gekennzeichnet sind.

Im Falle der geringeren Mindestkontrastschwelle gemäß Figur 3 genügt aber in manchen Bereichen auch der Strukturübergang zwischen Objekt und Hintergrund, um die betreffenden Kacheln als interessante Bereiche zu markieren. Somit kann durch Einstellen der Mindestkontrastschwelle eine für die Anwendung passende Balance zwischen möglichst starker Selektion und der Vermeidung einer Aussortierung von Codebereichen erzielt werden. Mittels Einstellung der Kachelgröße wird festgelegt, wie fein das Fenster sein soll, innerhalb dessen jeweils nach hinreichend Struktur gesucht werden soll. Damit wird einerseits eine genauere Anpassung der Gesamtfläche der interessanten Bereiche ermöglicht. Andererseits hat die Körnung der Kachelgröße auch eine Auswirkung auf die Größe der gesuchten Strukturen und damit auf das Auffinden einer geeigneten Mindestkontrastschwelle mit hoher Trennschärfe für Codebereiche und sonstige Bildbereiche.

**Patentansprüche**

1. Kamerasystem (10) zur Erzeugung eines in interessante und uninteressante Bereiche (106a-b) vorsegmentierten Bildes, mit einem Bildsensor (18) zur Aufnahme eines in Pixel aufgelösten Rohbildes und mit einer Auswertungseinheit (20), die dafür ausgebildet ist, das Rohbild in Teilbereiche (106a-b) zu unterteilen, für jeden Teilbereich (106a-b) einen Kontrastwert zu berechnen und anhand des Kontrastwertes zu entscheiden, ob der jeweilige Teilbereich (106a-b) ein interessanter Bereich (106a) oder ein uninteressanter Bereich (106b) ist, **dadurch gekennzeichnet, dass** die Auswertungseinheit (20) eine auf einem FPGA implementierte Vorverarbeitungseinheit (22), die jeweils auf die Pixel eines Teilbereichs (106a-b) zugreift und daraus summarische Werte $(a, b)$ für den jeweiligen Teilbereich (106a-b) erzeugt, und eine auf einem Mikroprozessor implementierte Strukturerkennungseinheit (24) aufweist, die den Kontrastwert des Teilbereichs (106a-b) aus dessen summarischen Werten $(a, b)$ berechnet, ohne auf Pixel des Teilbereichs (106a-b) zuzugreifen.

2. Kamerasystem (10) nach Anspruch 1,
wobei die summarischen Werte $(a, b)$ eine Teilbereichssumme $(b)$, in der alle Pixelwerte eines Teilbereichs (106a-b) aufaddiert sind, und eine Teilbereichsquadratsumme $(a)$ umfassen, in der alle quadrierten Pixelwerte des Teilbereichs (106a-b) aufaddiert sind.

3. Kamerasystem (10) nach einem der vorhergehenden Ansprüche,
wobei die Vorverarbeitungseinheit (22) dafür ausgebildet ist, ein Integralbild des Rohbildes zu berechnen, das in jedem Pixel die kumulierten Pixelwerte eines von dem Pixel und einer Ecke des Rohbildes aufgespannten Rechtecks hält.

4. Kamerasystem (10) nach einem der vorhergehenden Ansprüche,
wobei die Vorverarbeitungseinheit (22) dafür ausgebildet ist, die summarischen Werte $(a, b)$ in Echtzeit zu berechnen und ein Bild auszugeben, dem die summarischen Werte $(a, b)$ für die Teilbereiche (106a-b) hinzugefügt sind.

5. Kamerasystem (10) nach einem der vorhergehenden Ansprüche,
wobei die Strukturerkennungseinheit (24) dafür ausgebildet ist, den Kontrastwert basierend auf der Varianz oder der Standardabweichung der Pixelwerte eines Teilbereichs (106a-b) zu berechnen.

6. Kamerasystem (10) nach Anspruch 5,
wobei die Strukturerkennungseinheit (24) die Varianz als Differenz der Teilbereichsquadratsumme $(a)$ geteilt durch die Pixelanzahl $(n)$ eines Teilbereichs (106a-b) minus die quadrierte Teilbereichssumme $(b^2)$ geteilt durch die quadrierte Pixelanzahl $(n^2)$ des Teilbereiches (106a-b) und/oder die Standardabweichung als Wurzel der derart berechneten Varianz berechnet.

7. Kamerasystem (10) nach einem der vorhergehenden Ansprüche,
wobei die Strukturerkennungseinheit (24) den Kontrastwert eines Teilbereichs (106a-b) mit einer Mindestkontrastschwelle vergleicht, um zu entscheiden, ob der Teilbereich (106a-b) ein interessanter Bereich (106a) oder ein uninteressanter Bereich (106b) ist.

8. Kamerasystem (10) nach einem der vorhergehenden Ansprüche,
wobei die Strukturerkennungseinheit (24) dafür ausgebildet ist, in einem Labelbild mit einem als Flag genutzten Pixel je Teilbereich (1 06a-b) das Flag je nach Entscheidung anhand des Kontrastwerts auf einen Wert für einen interessanten Bereich (106a) oder einen Wert für einen uninteressanten Bereich (1 06b) zu setzen.

9. Kamerasystem (10) nach einem der vorhergehenden Ansprüche,
wobei die Teilbereiche (1 06a-b) rechteckige Teilbereiche (1 06a-b), insbesondere untereinander gleich große rechteckige Teilbereiche (1 06a-b) sind.

10. Kamerabasierter Codeleser (10) mit einem Kamerasystem nach einem der vorhergehenden Ansprüche und mit einer Decodiereinheit (26), die dafür ausgebildet ist, in den interessanten Bereichen (1 06a) nach Codes zu suchen, uninteressante Bereiche (1 06b) zu ignorieren und aufgefundene Codes (102, 104) zu decodieren.

11. Verfahren zum Vorsegmentieren eines in Pixel aufgelösten Rohbildes in interessante und uninteressante Bereiche (106a-b), wobei das Rohbild in Teilbereiche (1 06a-b) unterteilt, für jeden Teilbereich (1 06a-b) ein Kontrastwert berechnet und anhand des Kontrastwertes entschieden wird, ob der jeweilige Teilbereich (106a-b) ein interessanter Bereich (1 06a) oder ein uninteressanter Bereich (106b) ist,
**dadurch gekennzeichnet,**
**dass** in einer auf einem FPGA implementierten Vorverarbeitungseinheit (22) jeweils auf die Pixel eines Teilbereichs (1 06a-b) zugegriffen wird und daraus summarische Werte ($a$, $b$) für den jeweiligen Teilbereich (1 06a-b) erzeugt werden und dass in einer auf einem Mikroprozessor implementierten Strukturerkennungseinheit (24) der Kontrastwert des Teilbereichs (1 06a-b) aus dessen summarischen Werten ($a, b$) berechnet wird, ohne auf Pixel des Teilbereichs (106a-b) zuzugreifen.

12. Verfahren nach Anspruch 11,
wobei der Kontrastwert basierend auf der Varianz oder der Standardabweichung der Pixelwerte eines Teilbereiches (1 06a-b) berechnet wird, und wobei die Varianz als Differenz einer Teilbereichsquadratsumme ($a$), in der alle quadrierten Pixelwerte des Teilbereichs (1 06a-b) aufaddiert sind, geteilt durch die Pixelanzahl (n) eines Teilbereichs (106a-b) minus die quadrierte Teilbereichssumme ($b^2$), in der alle Pixelwerte eines Teilbereichs (106a-b) aufaddiert sind, geteilt durch die quadrierte Pixelanzahl ($n^2$) des Teilbereiches (1 06a-b) und/oder die Standardabweichung als Wurzel der derart berechneten Varianz berechnet wird.

13. Verfahren nach Anspruch 11 oder 12,
wobei der Kontrastwert eines Teilbereichs (106a-b) mit einer Mindestkontrastschwelle verglichen wird, um zu entscheiden, ob der Teilbereich (1 06a-b) ein interessanter Bereich (1 06a) oder ein uninteressanter Bereich (106b) ist, und wobei insbesondere entsprechend der Entscheidung jeweils ein als Flag genutztes Pixel eines Labelbilds mit einem Pixel je Teilbereich (1 06a-b) auf einen Wert für einen interessanten Bereich (1 06a) oder einen uninteressanten Bereich (106b) gesetzt wird.

14. Verfahren nach einem der Ansprüche 11 bis 13,
wobei in dem vorsegmentierten Bild nach Codes (102, 104) gesucht wird, indem die interessanten Bereiche (106a) auf Codes (102, 104) untersucht und die uninteressanten Bereiche (1 06b) ignoriert werden, und wobei aufgefundene Codes (102, 104) decodiert werden.

**Claims**

1. A camera system (10) for generating an image presegmented into regions (106a- b) of interest and of no interest, having an image sensor (18) for taking a raw image resolved into pixels and having an evaluation unit (20) which is configured to divide the raw image into part regions (106a- b), to calculate a contrast value for each part region (106a- b) and to decide with reference to the contrast value whether the respective part region (106a- b) is a region of interest (106a) or a region of no interest (106b),
**characterized in that** the evaluation unit (20) has a preprocessing unit (22) which is implemented on an FPGA, which respectively accesses the pixels of a part region (106a- b) and which generates summed values ($a$, $b$) therefrom for the respective part region (106a- b), and has a structure recognition unit (24) which is implemented on a microprocessor and calculates the contrast value of the part region (106a- b) from its summed values ($a, b$) without accessing pixels of the part region (106a- b) .

2. A camera system (10) in accordance with claim 1,
wherein the summed values ($a$, $b$) include a part region sum ($b$) in which all the pixel values of a part region (106a-b) are added up and a part region square sum (*a*) in which all squared pixel values of the part region (106a-b) are added up.

3.  A camera system (10) in accordance with any of the preceding claims,
    wherein the preprocessing unit (22) is designed to calculate an integral image of the raw image which holds in each pixel the  accumulated pixel values of a rectangle spanned by the pixel and by a corner of the raw image.

4.  A camera system (10) in accordance with any of the preceding claims,
    wherein the preprocessing unit (22) is configured to calculate the summed values (*a, b*) in real time and to output an image to which the summed values (*a, b*) for the part regions (106a-b) are added.

5.  A camera system (10) in accordance with any of the preceding claims,
    wherein the structure recognition unit (24) is configured to calculate the contrast value based on the variance or on the standard deviation of the pixel values of a part region (106a-b).

6.  A camera system (10) in accordance with claim 5,
    wherein the structure recognition unit (24) calculates the variance as a difference of the part region square sum (*a*) divided by the pixel number (*n*) of a part region (106a-b) minus the squared part region sum ($b^2$) divided by the squared pixel number ($n^2$) of the part region (106a-b) and/or the standard deviation as a square root of the variance thus calculated.

7.  A camera system (10) in accordance with any of the preceding claims,
    wherein the structure recognition unit (24) compares the contrast value of a part region (106a-b) with a minimum contrast threshold to decide whether the part region (106a-b) is a region of interest (106a) or a region of no interest (106b).

8.  A camera system (10) in accordance with any of the preceding claims,
    wherein, in a label image with a pixel used as a flag, the structure recognition unit (24) is designed to set the flag per part region (106a-b) in dependence on a decision using the contrast value to a value for a region of interest (106a) or to a value for a region of no interest (106b).

9.  A camera system (10) in accordance with any of the preceding claims,
    wherein the part regions (106a-b) are rectangular part regions (106a-b), in particular rectangular part regions of mutually the same size.

10. A camera-based code reader (10) having a camera system according to any of the preceding claims and a decoding unit (26) which is configured to search for codes in the regions of interest (106a), to ignore regions of no interest (106b), and to decode located codes (102, 104).

11. A method of presegmenting a raw image resolved into pixels into regions (106a- b) of interest and of no interest, wherein the raw image is divided into part regions (106a- b), a contrast value is calculated for every part region (106a- b) and a decision is made with reference to the contrast value whether the respective part region (106a- b) is a region of interest (106a) or a region of no interest (106b),
    **characterized in that** a respective pixel of a part region (106a- b) is accessed in a preprocessing unit (22) implemented on an FPGA and summed values (*a, b*) for the respective part region (106a- b) are  generated therefrom; and **in that** the contrast value of the part region (106a- b) is calculated from its summed values (*a, b*) in a structure recognition unit (24) implemented on a microprocessor without accessing pixels of the part region (106a- b) .

12. A method in accordance with claim 11,
    wherein the contrast value is calculated based on the variance or on the standard deviation of the pixel values of a part region (106a-b), and wherein the variance is calculated as a difference of a part region square sum (*a*) in which all squared pixel values of the part region (106a-b) are added up, divided by the pixel number (*n*) of a part region (106a-b) minus the squared part region sum ($b^2$) in which all the pixel values of a part region (106a-b) are added up, divided by the squared pixel number ($n^2$) of the part region (106a-b) and/or the standard deviation as the square root of the variance thus calculated.

13. A method in accordance with claim 11 or 12,
    wherein the contrast value of a part region (106a-b) is compared with a minimum contrast threshold to decide whether the part region (106a-b) is a region of interest (106a) or a region of no interest (106b), and wherein in particular in accordance with the decision a pixel respectively used as a flag of a label image with a pixel per part region (106a-b) is set to a value for a region of interest (106a) or for a region of no interest (106b).

14. A method in accordance with any of claims claim 11 to 13,
wherein a search is made for codes (102, 104) in the presegmented image in that the regions of interest (106a) are searched for codes (102, 104) and the regions of no interest (106b) are ignored, and wherein located codes (102, 104) are decoded.

**Revendications**

1. Système à caméra (10) pour engendrer une image préalablement segmentée en zones intéressantes et en zones inintéressantes (106a- b), avec un capteur d'image (18) pour prendre une image brute résolue en pixels, et comprenant une unité d'évaluation (20) qui est réalisée pour subdiviser l'image brute en zones partielles (106a- b), pour calculer pour chaque zone partielle (106a- b) une valeur de contraste et pour décider au moyen de la valeur de contraste si la zone partielle (106a- b) respective est une zone intéressante (106a) ou une zone inintéressante (106b), **caractérisé en ce que**
l'unité d'évaluation (20) comprend une unité de prétraitement (22), mise en oeuvre sur un composant FPGA, qui accède respectivement aux pixels d'une zone partielle (106a- b) et engendre à partir de ceux- ci des valeurs de sommation (a, b) pour la zone partielle respective (106a- b), et une unité de reconnaissance de structures (24) mise en oeuvre sur un microprocesseur, qui calcule la valeur de contraste de la zone partielle (106a- b) à partir de ces valeurs de sommation (a, b), sans accéder à des pixels de la zone partielle (106a- b) .

2. Système à caméra (10) selon la revendication 1,
dans lequel les valeurs de sommation (a, b) comprennent une somme de zone partielle (b) dans laquelle sont additionnées toutes les valeurs de pixels d'une zone partielle (106a-b), et une somme quadratique de zone partielle (a) dans laquelle sont additionnées toutes les valeurs de pixels au carré de la zone partielle (1 06a-b).

3. Système à caméra (10) selon l'une des revendications précédentes,
dans lequel l'unité de prétraitement (22) est réalisée pour calculer une image intégrale de l'image brute, qui contient dans chaque pixel les valeurs de pixels cumulées d'un rectangle défini par le pixel et par un coin de l'image brute.

4. Système à caméra (10) selon l'une des revendications précédentes,
dans lequel l'unité de prétraitement (22) est réalisée pour calculer les valeurs de sommation (a, b) en temps réel et pour fournir une image à laquelle sont ajoutées les valeurs de sommation (a, b) pour les zones partielles (106a-b).

5. Système à caméra (10) selon l'une des revendications précédentes,
dans lequel l'unité de reconnaissance de structures (24) est réalisée pour calculer la valeur de contraste en se basant sur la variance ou sur l'écart type des valeurs de pixels d'une zone partielle (106a-b).

6. Système à caméra (10) selon la revendication 5,
dans lequel l'unité de reconnaissance de structures (24) calcule la variance comme différence de la somme quadratique de zone partielle (a) divisée par le nombre de pixels (n) d'une zone partielle (106a-b) moins la somme de zone partielle au carré ($b^2$) divisée par le nombre de pixels au carré ($n^2$) de la zone partielle (106a-b) et/ou l'écart type comme racine de la variance ainsi calculée.

7. Système à caméra (10) selon l'une des revendications précédentes,
dans lequel l'unité de reconnaissance de structures (24) compare la valeur de contraste d'une zone partielle (106a-b) avec un seuil de contraste minimum, pour décider si la zone partielle (106a-b) est une zone intéressante (106a) ou une zone inintéressante (106b).

8. Système à caméra (10) selon l'une des revendications précédentes,
dans lequel l'unité de reconnaissance de structures (24) est réalisée, dans une image-étiquette comprenant un pixel utilisé comme drapeau pour chaque zone partielle (106a-b), pour lever le drapeau selon la décision prise à l'aide de la valeur de contraste à une valeur pour une zone intéressante (106a) ou à une valeur pour une zone inintéressante (106b).

**9.** Système à caméra (10) selon l'une des revendications précédentes,
dans lequel les zones partielles (106a-b) sont des zones partielles rectangulaires (106a-b), en particulier des zones partielles rectangulaires (106a-b) égales les unes aux autres.

**10.** Lecteur de code basé sur caméra (10) comprenant un système à caméra selon l'une des revendications précédentes, et comprenant une unité de décodage (26) qui est réalisée pour rechercher des codes dans les zones intéressantes (106a) pour ignorer des zones inintéressantes (106b), et pour décoder des codes trouvés (102, 104).

**11.** Procédé pour segmentée préalablement une image brute résolue en pixels en zones intéressantes et en zones inintéressantes (106a- b), dans lequel l'image brute est subdivisée en zones partielles (106a- b), une valeur de contraste est calculée pour chaque zone partielle (106a- b), et à l'aide de la valeur de contraste il est pris une décision quant à savoir si la zone partielle respective (106a- b) est une zone intéressante (106a) ou une zone inintéressante (106b),
**caractérisé en ce que**
dans une unité de prétraitement (22) mise en oeuvre sur un composant FPGA, on accède respectivement aux pixels d'une zone partielle (103a- b) et on engendre à partir de ceux- ci des valeurs de sommation (a, b) pour la zone partielle respective (106a- b), et **en ce que** l'on calcule, dans une unité de reconnaissance de structures (24) mise en oeuvre sur un microprocesseur, la valeur de contraste de la zone partielle (106a- b) à partir des valeurs de sommation (a, b) de celle- ci, sans accéder au pixels de la zone partielle (106a- b) .

**12.** Procédé selon la revendication 11,
dans lequel la valeur de contraste est calculée en se basant sur la variance ou sur l'écart type des valeurs de pixels d'une zone partielle (106a-b), et dans lequel la variance est calculée comme étant la différence d'une somme quadratique de zone partielle (a) dans laquelle toutes les valeurs de pixels au carré de la zone partielle (106a-b) sont additionnées, divisée par le nombre de pixels (n) d'une zone partielle (106a-b) moins la somme de zone partielle au carré ($b^2$), dans laquelle sont additionnées toutes les valeurs de pixels d'une zone partielle (106a-b), divisée par le nombre de pixels au carré ($n^2$) de la zone partielle (106a-b) et/ou l'écart standard est calculé comme racine de la variance ainsi calculée.

**13.** Procédé selon la revendication 11 ou 12,
dans lequel la valeur de contraste d'une zone partielle (106a-b) est comparée à un seuil de contraste minimum pour décider si la zone partielle (106a-b) est une zone intéressante (106a) ou une zone inintéressante (106b), et dans lequel, en particulier en correspondance de la décision, un pixel respectif utilisé comme drapeau dans une image-étiquette comprenant un pixel pour chaque zone partielle (106a-b) est levé à une valeur pour une zone intéressante (106a) ou pour une zone inintéressante (106b).

**14.** Procédé selon l'une des revendications 11 à 13,
dans lequel on recherche des codes (102, 104) dans l'image préalablement segmentée, en recherchant des codes dans les zones intéressantes (106a) et en ignorant les zones inintéressantes (106b), et dans lequel les codes trouvés (102, 104) sont décodés.

Figur 1

Figur 2

Figur 3

Figur 4

**IN DER BESCHREIBUNG AUFGEFÜHRTE DOKUMENTE**

**In der Beschreibung aufgeführte Patentdokumente**

- US 6738496 B1

**In der Beschreibung aufgeführte Nicht-Patentliteratur**

- **S. EHSAN et al.** Exploring Integral Image Word Length Reduction Techniques for SURF Detector. *2009 Second International Conference on Computer and Electrical Engineering,* 28. Dezember 2009, 635-639